# EUROPÄISCHE PATENTSCHRIFT

(11) **EP 0 314 024 B1**
(45) Veröffentlichungstag und Bekanntmachung des Hinweises auf die Patenterteilung: **21.04.1993**
(21) Anmeldenummer: 88117626.7
(22) Anmeldetag: 22.10.1988
(51) Int. Cl.: B29C 47/68

(54) **Verfahren zum Filtern eines warmweichen Kunststoffes und Filtereinrichtung für Extrusionsanlage zur Durchführung des Verfahrens**
Method of filtering a plastic meltable material and filter apparatus for an extrusion installation to carry out this method
Procédé de filtrage d'une matière plastique fusible et dispositif de filtrage pour une installation d'extrusion mettant en oeuvre le procédé

(30) Priorität: 29.10.1987 CH 4248/87
(43) Veröffentlichungstag der Anmeldung: 03.05.1989
(73) Patentinhaber: INDUPACK AG, CH-6300 Zug (CH)
(72) Erfinder: Petschner, Goetz, CH-8702 Zollikon (CH)
(74) Vertreter: Petschner, Goetz

(56) Entgegenhaltungen:
- EP-A- 0 250 695
- DE-A- 1 800 169
- DE-A- 2 522 078
- DE-A- 2 719 790
- DE-A- 2 947 698
- DE-A- 3 527 173
- DE-B- 1 554 913
- FR-A- 1 550 932

## Beschreibung

Die vorliegende Erfindung betrifft eine Filtereinrichtung für Extrusionsanlagen, bei welcher ein warmweicher Kunststoffstrom durch einen Strömungskanal in einem Filtergehäuse zu einem Auslass gelangt und dabei von Schiebermitteln auswechselbar getragene, temporär aus dem Kunststoffstrom herausschiebbare Filtermittel durchdringt.

Extrusionsprozesse, bei denen warmweiche Kunststoffe mittels Schnecken- oder Kolbenpressen durch Düsenmittel extrudiert werden, dienen beispielsweise der Herstellung von Folien u. dgl.

Bei Einrichtungen dieser Art ist es üblich, die warmweichen Kunststoffe durch Filtermittel zu pressen, um Verunreinigungen zu entfernen. Diese Filtermittel können dabei quer durch den zu filternden Kunststoffstrom bewegt werden, um sich zusetzende Filtermittel durch unverschmutzte Filtermittel zu ersetzen, wofür diese von Schiebermitteln getragen werden.

Solche Einrichtungen verlangen allerdings sehr aufwendige Konstruktionen, um solche Schieber quer zum unter relativ hohem Strömungsdruck stehenden Kunststoffstrom bewegen zu können. In der Regel muss die Strömung unterbrochen werden, um einen Filterwechsel vornehmen zu können. Werden Ausgangsmaterialien (Granulate) mit hohem Verunreinigungsgrad (etwa durch Recycling) verwendet, werden solche Einrichtungen dann auf Grund des erhöhten Filterverbrauches rasch unrentabel. Nachteilig ist aber auch, dass nach einem Filterwechsel mit dem Filter unweigerlich Luft in den warmweichen Kunststoffstrom eingebracht wird, was zu unbrauchbaren Abschnitten des Extrudates führt.

Es ist somit Aufgabe der vorliegenden Erfindung, eine Filtereinrichtung zu schaffen, die einen geringeren Filterverbrauch gestattet und trotzdem eine wirksame und wirtschaftlich vertretbare Reinigung von auch stark verschmutzten warmweichen Kunststoffströmen gewährleistet und zudem Extrudatfehler durch Lufteinschluss ausschliesst.

Diese Filtereinrichtung zeichnet sich erfindungsgemäss dadurch aus, dass ein Schieber mindestens zwei Strömungskanal-Abschnitte bildende, in Verschiebungsrichtung hintereinander mit Abstand angeordnete Kammern aufweist, welche je durch Filterplatten verschlossen sind, wobei diese Strömungskanal-Abschnitte in vorgegebener Stellung des Schiebers im Filtergehäuse innenseitig über je einen Durchlass mit dem Auslasskanal im Filtergehäuse und aussenseitig über die Filterplatten mit dem Einlasskanal oder mit einem Rückstromkanal im Filtergehäuse in Strömungsverbindung stehen.

Somit kann zunächst eine durch Verunreinigung reduzierte Durchströmfähigkeit der Filtermittel des einen oder anderen Strömungskanal-Abschnittes durch eine Rückstrom-Spülung oder gegebenenfalls durch Auswechslung wieder hergestellt werden, ohne dass hierfür der Extrusionsprozess unterbrochen werden müsste.

Von ganz erheblicher Bedeutung ist aber auch, dass nunmehr nach einem Filterwechsel die im betreffenden Strömungskanal-Abschnitt eingeschlossene Luft vor dem Einschub dieses Kanalabschnittes in die kontinuierliche Strömung des warmweichen Kunststoffstromes durch eine Rückstrom-Spülung vollständig entfernt werden kann, so dass nunmehr die bisher unvermeidlichen Ausschussabschnitte des Extrudates nach einem Filterwechsel vollständig vermieden werden können.

Um dabei ein strömungsdruckentlastetes Verschieben des Schiebers zu gestatten, ist es von Vorteil, wenn mindestens der Einlasskanal über Zweigleitungen beidseitig der Strömungskanal-Abschnitte des Schiebers mit diesen über die Filterplatten in Strömungsverbindung stehen. Dadurch erfolgt gleichzeitig eine Druckentlastung an den Filtern.

Um Sicherzustellen, dass in jeder Stellung des Schiebers relativ zum Einlasskanal im Filtergehäuse der warmweiche Kunststoffstrom durch die Filtereinrichtung hindurch aufrecht erhalten bleibt, ist es erforderlich, dass der Abstand der Zweigleitungen im Filtergehäuse in Verschiebungsrichtung des Schiebers mindestens dem Abstand der im Schieber angeordneten Strömungskanal-Abschnitte sowie der Abstand zwischen Einlasskanal resp. den betreffenden Zweigleitungen und dem einen oder anderen Rückstromkanal mindestens der Querschnittserstreckung eines Strömungskanal-Abschnittes in Verschiebungsrichtung entspricht.

Eine beispielsweise Ausführungsform einer Filtereinrichtung ist nachfolgend anhand der Zeichnungen näher erläutert. Es zeigen:
- Fig. 1: eine Schrägrissdarstellung der erfindungsgemässen Filtereinrichtung für Extrusionsanlagen zum Filtern eines warmweichen Kunststoffes;
- Fig. 2: die Anordnung gemäss Fig. 1 in einer anderen Arbeitsstellung; und
- Fig. 3 bis 5: die Anordnung gemäss Fig. 1 in einer Schnittdarstellung in jeweils anderer Funktionslage.

Die veranschaulichte Filtereinrichtung umfasst ein Filtergehäuse 1, dessen einlasseitiger Strömungskanal 3 an eine nicht näher gezeigte, bekannte Fördereinrichtung einer Extrusionsanlage und ausgangsseitig über einen Strömungskanalauslass 4 an eine Extrusionsdüse o. dgl. anschliessbar ist.

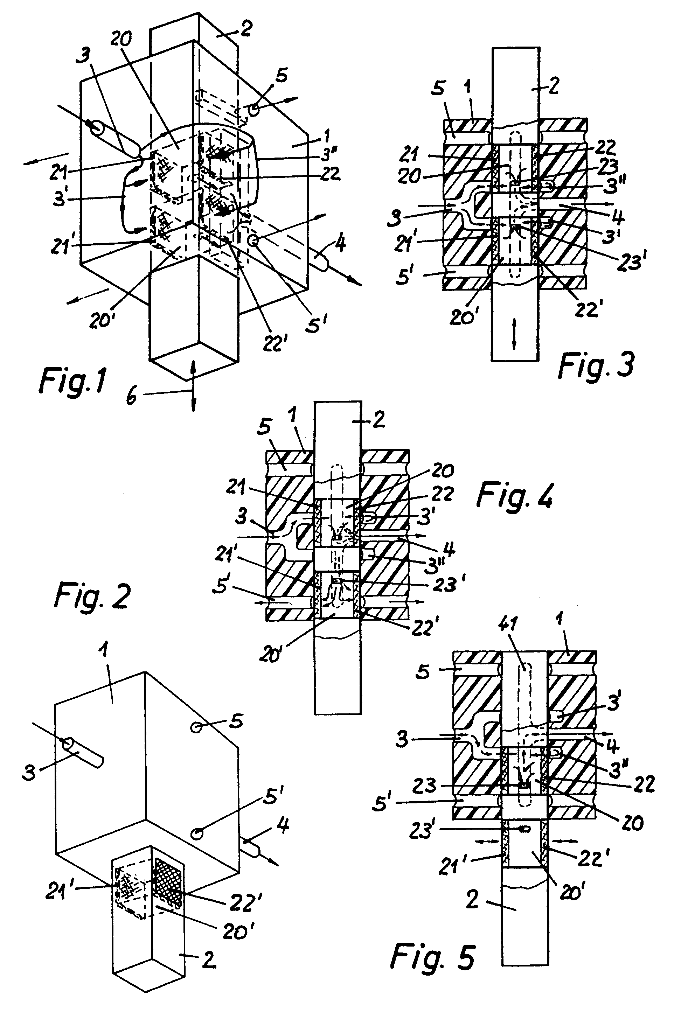

Im Gehäuse 1 ist ein Schieber 2 geführt, welcher durch geeignete, hier nicht näher gezeigte Stellmittel in Richtung des Pfeiles 6 in Fig. 1 in vorgegebene Stellungen relativ zum Gehäuse 1 resp. Einlasskanal 3 verschoben und dort gehalten werden kann und zwar aus einer mittleren Stellung heraus in der Darstellung nach oben oder unten in eine Zwischenoder Spülstellung und dann weiter nach oben oder unten in eine äussere End- oder Auswechselstellung, wie das nachfolgend noch näher beschrieben ist.

Es sei an dieser Stelle ausdrücklich darauf hingewiesen, dass die gezeigte und beschriebene Einrichtung nur als Prinzip zu verstehen ist und einer Reihe von Modifikationen in Bezug auf Form, Aufbau und Führung der Kanäle in Gehäuse 1 und Schieber 2 unterliegen kann.

Erfindungswesentlich ist, dass der Schieber 2 hier zwei Strömungskanal-Abschnitte bildende, in Verschiebungsrichtung hintereinander mit Abstand angeordnete Kammern 20 und 20′ aufweist, welche je durch Filterplatten 21 und 22 resp. 21′ und 22′ verschlossen sind und die in der Mittelstellung des Schiebers 2 (Fig. 1 und 3) über Zweigleitungen 3′ und 3˝ mit dem Einlasskanal 3 kommunizieren. Hierbei werden für ein strömungsdruckentlastetes Verschieben des Schiebers 2 die Strömungskanal-Abschnitte 20, 20′ der Anströmung resp. einer nachfolgend noch beschriebenen Rückströmung symmetrisch ausgesetzt, wie das die Darstellungen erkennen lassen. Dies bedeutet gleichzeitig eine Druckentlastung durch Druckausgleich an den Filtern.

Wie insbesondere die Figuren 3 bis 5 weiter zeigen, stehen weiter die Strömungskanal-Abschnitte 20,20′ in vorgegebener Stellung des Schiebers 2 im Filtergehäuse 1 innenseitig über je einem Durchlass 23 resp. 23′ mit dem Auslasskanal 4 im Filtergehäuse 1 und aussenseitig über die Filterplatten mit dem Einlasskanal 3 oder mit einem Rückstromkanal 5 resp. 5′ im Filtergehäuse 1 in Strömungsverbindung.

Hierbei entspricht der Abstand der Zweigleitungen 3′, 3˝ im Filtergehäuse 1 in Verschiebungsrichtung des Schiebers 2 mindestens dem Abstand der im Schieber 2 angeordneten Strömungskanal-Abschnitte 20, 20′ sowie der Abstand zwischen Einlasskanal 3 resp. den betreffenden Zweigleitungen 3′, 3˝ und dem einen oder anderen Rückstromkanal 5 resp. 5′ mindestens der Querschnittserstreckung eines Strömungskanal-Abschnittes 20, 20′ in Verschiebungsrichtung.

Dies stellt sicher, dass in jeder vorgenannten Stellung des Schiebers 2 relativ zum Einlasskanal 3 im Filtergehäuse 1 der warmweiche Kunststoffstrom vom Einlasskanal 3 zum Auslasskanal 4 aufrecht erhalten bleibt.

In der Mittelstellung des Schiebers 2 im Gehäuse 1 (Fig. 3) kann somit der verunreinigte Kunststoffstrom in beide Kammern 20 und 20′ von beiden Seiten durch die Filter 21 und 22 resp. 21 und 22′ eindringen und gefiltert über die Durchlässe 23 resp. 23′ in der einen oder anderen Kammerwand oder in beiden Kammerwänden und dem entsprechend geformten Auslasskanal 4 wieder austreten.

Für eine Rückspülung der Filter 21′,22′ des in der Darstellung unteren Kanalabschnittes 21 wird der Schieber 2 etwas nach unten versetzt, bis dieser aus dem Strömungsbereich der hier unteren Zweigleitung 3˝ gelangt (Fig. 4). Damit kann ein Teil des gefilterten Auslassstromes in diesen Kanalabschnitt 21 über den Durchlass 23′ einfliessen und durch seine Filter 21′ und 22′ hindurch über den nun kommunizierenden Rückstromkanal 5 austreten, bei welchem Stromfluss ein Spülen und somit Reinigen der betreffenden Filter erfolgt. Der warmweiche Kunststoffstrom setzt sich dabei ungehindert durch den hier oberen Kanalabschnitt 20 fort.

Dies trifft auch zu, wenn der Schieber 2 in seine Auswechselstellung (Fig. 5) gebracht wird, wobei der Eintritt des warmweichen Kunststoffstromes in den hier oberen Kanalabschnitt 20 nun über die untere Zweigleitung 3˝ erfolgt.

Nach einem Auswechseln etwa der Filter 21′ und 22′ erfolgt eine Rückstellung des Schiebers 2 zunächst in die vorbeschriebene Spülstellung gemäss Fig. 4. Die hierbei automatisch einsetzende Rückspülung verdrängt die Luft aus dem betreffenden Kanalabschnitt 20′, worauf eine Verschiebung in die Mittelstellung erfolgen kann oder darüber hinaus nach oben, um die Filter des anderen Kanalabschnittes 20 zu spülen oder auszuwechseln.

Mittels Drucksonden in den Zweigleitungen (nicht gezeigt), deren vorzugsweise einstellbarer Schwellwert ein Mass für die Verschmutzung der Filter und den damit verbundenen Rückstau ist, kann die Verstellung des Schiebers für eine Rückspülung der betreffenden Filter oder für deren Auswechslung automatisch angesteuert werden.

Die vorbeschriebene Filtereinrichtung, welche im Rahmen der Erfindung natürlich weiter vielfach modifiziert werden kann, gestattet somit ein Verfahren zum Filtern eines warmweichen Kunststoffes ohne grossen Aufwand an Filtermitteln auch bei stark verschmutztem zu extrudierenden Material. Dies wird insbesondere auch dadurch erreicht, dass ein Auswechseln der Filtermittel erst nach mehrmaligem Spülen überhaupt notwendig wird. Ferner kann der warmweiche Kunststoffstrom sowohl beim Spülen als auch beim Wechseln von Filtermitteln aufrecht erhalten bleiben und Extrudatmängel durch eingetragene Luft beim Filterwechsel sind ausgeschlossen.

Weiter ist von ganz erheblicher Bedeutung, dass sich der Schieber strömungsdruckentlastet verschieben lässt, da sowohl die Anströmung als auch die Rückströmung symmetrisch am Schieber wirksam wird. Letzteres kann etwa so erreicht werden, dass der Auslasskanal 4 im Filtergehäuse 1 über Zweigleitungen 41 beidseitig des Schiebers 2 mit den StrömungskanalAbschnitten 20 resp. 20′ über sich dann gegenüberliegende Durchlässe 23 resp. 23′ in Strömungsverbindung steht.

## Patentansprüche

1. Filtereinrichtung für Extrusionsanlagen, bei welcher ein warmweicher Kunststoffstrom durch einen Strömungskanal in einem Filtergehäuse zu einem Auslass gelangt und dabei von Schiebermitteln auswechselbar getragene, temporär aus dem Kunststoffstrom herausschiebbare Filtermittel durchdringt,dadurch gekennzeichnet, dass ein Schieber (2) mindestens zwei Strömungskanal-Abschnitte bildende, in Verschiebungsrichtung hintereinander mit Abstand angeordnete Kammern (20 und 20') aufweist, welche je durch Filterplatten (21,22 resp. 21',22') verschlossen sind, wobei diese Strömungskanal-Abschnitte (20,20') in vorgegebener Stellung des Schiebers (2) im Filtergehäuse (1) innenseitig über je einen Durchlass (23 resp. 23') mit dem Auslasskanal (4) im Filtergehäuse (1) und aussenseitig über die Filterplatten mit dem Einlasskanal (3) oder mit einem Rückstromkanal (5 resp. 5') im Filtergehäuse (1) in Strömungsverbindung stehen.

2. Filtereinrichtung nach Anspruch 1, dadurch gekennzeichnet, dass mindestens der Einlasskanal (3) über Zweigleitungen (3', 3") beidseitig der Strömungskanal-Abschnitte (20,20') des Schiebers (2) mit diesen über die Filterplatten (21,21' resp. 22,22') in Strömungsverbindung stehen.

3. Filtereinrichtung nach Anspruch 1, dadurch gekennzeichnet, dass der Abstand der Zweigleitungen (3',3") im Filtergehäuse (1) in Verschiebungsrichtung des Schiebers (2) mindestens dem Abstand der im Schieber (2) angeordneten Strömungskanal-Abschnitte (20,20') sowie der Abstand zwischen Einlasskanal (3) resp. den betreffenden Zweigleitungen (3',3") und dem einen oder anderen Rückstromkanal (5 resp. 5') mindestens der Querschnittserstreckung eines Strömungskanal-Abschnittes (20,20') in Verschiebungsrichtung entspricht.

4. Filtereinrichtung nach Anspruch 1 , dadurch gekennzeichnet, dass der Auslasskanal (4) im Filtergehäuse (1) über Zweigleitungen (41) beidseitig des Schiebers (2) mit den Strömungskanal-Abschnitten (20 resp. 20') über sich gegenüberliegende Durchlässe (23 resp. 23') in vorgegebenen Schieberstellungen in Strömungsverbindung steht.

## Claims

1. A filtering apparatus for extrusion machines wherein a heat-softened stream of plastics material arrives by way of a flow conduit in a filter housing at an outlet, and thereby permeates replaceable filter means which are carried by sliding means which are temporarily slid out of the stream of plastics material, wherein the one slide (2) comprises at least two chambers (20 and 20'), forming flow conduit sections and arranged spaced in tandem in the direction of displacement, both of which are closed by filter plates (21,22 or 21',22'); said flow conduit sections (20,20') being, internally in flow connection via, in each case, a port (23 or 23'), with the outlet conduit (4) in said filter housing (1) and, externally, via said filter plates, with the inlet conduit (3) or with a backflow conduit (5 or 5') in said filter housing (1).

2. A filtering apparatus as defined in claim 1, wherein at least said inlet conduit (3) is in flow connection, via branch pipes (3',3") on both sides of said flow conduit sections (20,20') of said slide (2), with said flow conduit sections via said filter plates (21,21' or 22,22').

3. A filtering apparatus as defined in claim 1, wherein the spacing of said branch pipes (3',3") in said filter housing (1) in the direction of displacement of said slide (2) corresponds at least to the spacing of said flow conduit sections (20,20') arranged in said slide (2), as well as the spacing between inlet conduit (3), respectively, the respective branch pipe (3,3") and the one or the other backflow conduits (5 or 5'), corresponding at least to the cross-sectional extension of a flow conduit section (20,20') in the direction of displacement.

4. A filtering apparatus as defined in claim 1, wherein said outlet conduit (4) in said filter housing (1) is in flow connection, via branch pipes (41) both sides of said slide (2), with said flow conduit sections (20 or 20') via ports (23 or 23') lying opposite thereto at a specified slide position.

## Revendications

1. Dispositif de filtrage pour des installations d'extrusion, avec lequel un flux de matière plastique fusible parvient à une évacuation dans un boîtier de filtres, par un canal d'écoulement et traverse alors des moyens de filtrage qui peuvent être temporairement retirés du flux de matière plastique et sont portés de manière à être changés à l'aide de moyens coulissants, caractérisé en ce qu'un tiroir (2) présente deux chambres (20 et 20') disposées à distance l'une derrière l'autre et formant deux sections de canal d'écoulement, lesquelles chambres sont fermées, chacune par des plaques de filtres (21, 22, respectivement 21', 22'), ces sections de canal d'écoulement (20, 20') étant reliées en continu dans une position prédéterminée du tiroir (2) dans le boîtier de filtres (1), sur la face interne et par l'intermédiaire, chacune d'un passage (23, respectivement 23'), avec le canal d'évacuation (4) dans le boîtier de filtres (1) et étant reliées sur la face externe, par l'intermédiaire des plaques de filtres, avec le canal d'entrée (3) ou avec un canal de reflux (5, respectivement 5') dans le boîtier de filtres (1).

2. Dispositif de filtrage selon la revendication 1, caractérisé en ce qu'au moins le canal d'entrée (3) est relié, par l'intermédiaire de conduites de dérivation (3', 3"), des deux côtés des sections de canal d'écoulement (20, 20') du tiroir (2), et avec celles-ci par l'intermédiaire des plaques de filtre (21, 21', respectivement 22, 22').

3. Dispositif de filtrage selon la revendication 1, caractérisé en ce que l'écart des conduites de dérivation (3', 3") dans le boîtier de filtres (1) correspond, dans le sens de déplacement du tiroir (2), au moins à l'écart des sections de canal d'écoulement (20, 20') disposées dans le tiroir (2) ainsi que l'écart entre le canal d'entrée (3), respectivement des conduites de dérivation (3', 3") et l'un ou l'autre canal de reflux (5, respectivement 5') correspond au moins à l'extension en coupe transversale d'une section de canal d'écoulement (20, 20') dans le sens de coulissement.

4. Dispositif selon la revendication 1, caractérisé en ce que le canal d'évacuation (4) dans un boîtier de filtres (1) est relié, dans des positions prédéterminées du tiroir, des deux côtés du tiroir (2) par l'intermédiaire des conduites de dérivation (41) avec les sections de canal d'écoulement (20, respectivement 20') à l'aide de passages disposés l'un en face de l'autre (23, respectivement 23').
